# EUROPÄISCHE PATENTSCHRIFT

(11) **EP 0 991 470 B1**
(45) Veröffentlichungstag und Bekanntmachung des Hinweises auf die Patenterteilung: **05.03.2003**
(21) Anmeldenummer: 98938641.2
(22) Anmeldetag: 24.06.1998
(51) Int. Cl.: B01J 47/00

(54) **FILTER FÜR REINLUFT**
FRESH AIR FILTER
FILTRE POUR AIR PUR

(30) Priorität: 27.06.1997 DE 19727295
(43) Veröffentlichungstag der Anmeldung: 12.04.2000
(73) Patentinhaber: MBH Filtration GmbH & Co. KG, 40699 Erkrath (DE)
(72) Erfinder: DE RUITER, Ernest, D-51381 Leverkusen (DE); TÖRNBLOM, Jonas, D-40699 Erkrath (DE)
(74) Vertreter: Voth, Gerhard, Dipl.-Ing.
(86) Internationale Anmeldenummer: EP9803867
(87) Internationale Veröffentlichungsnummer: WO99000192

(56) Entgegenhaltungen:
- EP-A- 0 659 482
- DE-A- 2 244 685
- DE-A- 3 904 623
- DE-A- 4 034 798
- DE-A- 19 521 680
- DE-A- 19 534 113
- DE-A- 19 601 595
- US-A- 3 857 732
- DATABASE WPI Week 8644 Derwent Publications Ltd., London, GB; AN 86-289223 XP002083195 & JP 61 213052 A (SEKISUI CHEM. IND.) , 22. September 1986

## Beschreibung

Es ist bekannt Adsorptionsfilter anzuwenden, um unerwünschte Stoffe aus einem gasförmigen oder flüssigen Gemisch zu entfernen. So beschreibt z.B. die EP-A-0 340 542 Adsorptionsfilter, welche aus einem Trägergerüst mit einer Umhüllung von Adsorberteilchen besteht. Die am Trägergerüst fixierten Adsorberteilchen reinigen durch das Filter geführte Gase oder Flüssigkeiten von unerwünschten Stoffen. Solche Reinigungsvorgänge stellen immer ein Gleichgewicht zwischen stationärer und beweglicher Phase dar. Für normale Anforderungen stellen die bekannten Adsorptionsfilter ein ausreichendes Mittel dar, um eine Reinigung zu bewirken.

Moderne industrielle Entwicklungen haben dazu geführt, die Anforderungen für Reinluft erheblich zu steigern. Solche industrielle Entwicklungen sind z.B. die Herstellung hoch empfindlicher Produkte, wie die Herstellung von Chips im Gigabitbereich in der Mikroelektronik und die Herstellung von Arzneimitteln. Die frühere Reinigungstechnik hatte sich auf die Entfernung von Partikeln konzentriert, wobei eine zusätzliche Entfernung von unerwünschten gasförmigen Stoffen dadurch zustande kam, daß den Filtern ein Adsorbens zugesetzt wurde. Mit solchen Adsorbenzien war man in der Lage, in wirksamer Weise unerwünschte Stoffe zu entfernen, wie es z.B. in der EP-A-0 540 542 beschrieben wird. Die bekannten Adsorptionsfilter sind jedoch nicht in der Lage, die vollständige Bandbreite an gasförmigen Komponenten aus der Reinluft zu entfernen. Solche gasförmigen Komponenten kann man grob unterscheiden in hochsiedende Stoffe einerseits und sehr flüchtige Stoffe andererseits. Hochsiedende Stoffe, wie z.B. Wasser oder Phenol, sind mit herkömmlichen Adsorptionsfiltern einfach und effektiv aus Gasgemischen zu entfernen. Solche herkömmlichen Adsorptionsfilter weisen z.B. Adsorptionspartikel aus Aktivkohle auf. Völlig anders verhalten sich die flüchtigen Stoffe, wie z.B. SO₂ und NH₃. Sie werden durch die herkömmlichen Adsorptionsfilter nur unvollständig entfernt und es stellt sich ein solches Gleichgewicht mit den Adsorptionspartikeln ein, daß die flüchtigen Stoffe nach anfänglicher Bindung später wieder freigesetzt werden. Eine dauerhafte Bindung ist somit nicht gewährleistet. Eine Möglichkeit diese nicht ausreichende Adsorption zu verbessern, ist die vorherige Imprägnierung der Aktivkohle mit sauren oder basischen Hilfsmitteln. Will man z.B. NH₃ aus einer gasförmigen Mischung entfernen, so kann eine solche Imprägnierung mit Phosphorsäure vorgenommen werden, soll andererseits SO₂ entfernt werden, bietet sich eine vorherige Imprägnierung mit K₂CO₃ an. Die unerwünschten Stoffe gehen eine chemische Reaktion mit dem Imprägnierungsmittel ein und werden auf diese Weise dauerhaft und irreversibel aus dem Gasgemisch entfernt. Dabei wird das Imprägnierungsmittel verbraucht, mit dem Ergebnis, daß nach einer bestimmten Zeit eine Erschöpfung der Reinigungskapazität festgestellt wird. Durch die Imprägnierung ist man in der Lage, Filter mit einer verbesserten Reinigungswirkung zur Verfügung zu stellen. Die Imprägnierung der imprägnierten Adsorberteilchen beeinträchtigt aber das ursprüngliche Adsorptionsvermögen dieser Teilchen sowohl bezüglich der Kapazität als auch der Adsorptionskinetik. Die Adsorberteilchen werden also im Vergleich mit ihrer ursprünglichen Leistung unerwünschte Stoffe aus Gasgemischen langsamer und in einer geringeren Menge entfernen. Insoweit stellt sich an den Adsorberteilchen ein neues Gleichgewicht zwischen der ursprünglich vorhandenen Adsorption und der chemischen Adsorption der Imprägniersubstanz ein. Bei einer großen Menge Imprägniersubstanz wird eine erhebliche Verschlechterung der Adsorption festgestellt, insbesondere wenn eine ungünstige Verteilung dieser Imprägniersubstanz vorliegt. Versucht man demgegenüber eine Imprägnierung mit weniger Imprägniersubstanz, wird zwar die adsorbierende Kapazität weniger beeinträchtigt, man muß aber eine baldige Erschöpfung der Imprägniersubstanz in Kauf nehmen. Grundsätzlich ist die Aufgabenstellung bei Reinstluft sehr komplex. Es sind neben Gasen (wie z.B. H₂S, NO₂, SO₂, NH₃, Cl₂), auch Ionen (SO₄²⁻, NO₃⁻, Cl⁻, PO₄³⁻_{,} Na⁺, NH₄⁺) zu entfernen, von denen nicht im einzelnen bekannt ist, in welcher Form sie vorliegen.

Der Erfindung liegt die Aufgabe zugrunde, ein Filter zu schaffen, das bei guter Adsorptionskinetik und Kapazität saure und basische Gase und andere Verunreinigungen auch in Spuren einwandfrei aus Luftströmen entfernt und die Herstellung von Reinstluft für die eingangs genannten Zwecke ermöglicht.

Diese Aufgabe wird durch einen Filter mit hoher Luftdurchlässigkeit gelöst, an dem Ionenaustauscherkügelchen fixiert sind. Der Träger ist vorzugsweise ein großporiger retikulierter Polymerschaum, dessen Stege mit einer Schicht von lonenaustauschern umhüllt sind. Der Träger kann aber auch flach sein und aus einem hoch luftdurchlässigen textilen Trägermaterial, z.B. Gewebe, Gewirke oder Nonwoven bestehen, an dem die Ionenaustauscherkügelchen in der gleichen Weise fixiert sind, wie das für Aktivkohlekügelchen sogenannte Kugelkohle bekannt ist (DE-C-33 04 349).

Die Ionenaustauscherkügelchen können stark basische Anionenaustauscher oder stark saure Kationenaustauscher sein. Derartige Ionenaustauscher sind bekannt (Literaturhinweis: Winnacker-Küchler, 4.Aufl., Bd.1 und Römpp 9.Aufl. v. 1995). Sie liegen fast ausschließlich in Form von bis zu 1 mm große Kügelchen vor, die in Schüttung eingesetzt werden. Die Kügelchen bestehen aus porösen oder quellfähigen Polymeren, überwiegend auf Basis von Styrol, meist vernetzt in Form von Styrol/Divinylbenzolpolymeren, die chemische Gruppen mit austauschbaren Ionen tragen, die den angestrebten Austausch ermöglichen. In Kationenaustauschern sind die chemischen Gruppen häufig Sulfongruppen, während Anionenaustauscher quaternäre Ammoniumgruppen enthalten. Ionenaustauscher mit diesen chemischen Gruppen sind starke Ionenaustauscher.

Ionenaustauscher werden fast ausschließlich in nasser Form für die Reinigung von nassen Medien, insbesondere zur Wasserreinigung eingesetzt. Es ist deshalb erstaunlich und für den Fachmann nicht zu erwarten, daß Ionenaustauscher auch aus Luft und sogar in sehr trockener Atmosphäre mit weniger als 40 % relativer Feuchtigkeit eine außerordentlich hohe Abscheideleistung ermöglichen, und vermutlich in Form von Mikrotropfchen oder Mikrostäubchen vorliegende Ionen, Formaldehyd und andere selbst nur noch durch den Geruch wahrnehmbare, aber analytisch nicht mehr nachweisbare Verbindungen entfernen können.

Großporige retikulierte Polymer-Schäume sind bekannt. Überwiegend handelt es sich um Polyurethan (PUR-Schäume). Großporige retikulierte PUR-Schäume haben ein Gewicht von 20 bis 60 g und Poren von 1,5 bis 3 mm. Die Porengröße wird üblicherweise auch in ppi, d.h. Poren pro Inch angegeben und haben dementsprechend für die Zwecke der Erfindung eine Porosität von 8 bis 30 ppi. Als Träger für die Ionenaustauscherkügelchen eignen sich großponge retikulierte Polyolefin-Schäume, die insbesondere aus Polyechylen und Polypropylen bestehen. In bezug auf die Großporigkeit und die Retikulierung gilt für den Polyolefin-Schaum das gleiche, wie vorstehend in Zusammenhang mit dem PUR-Schaum aufgerührt wurde. Besonders geeignet sind Polyolefin-Schäume, die durch zusätzliche Zusätze hydrophil modifiziert sind. Solche retikulienen Poiyolefin-Schäume sind bekannt. Sie wurden z.B. von der Firma Troplast in Troisdorf in den Verkehr gebracht,

Retikulierte Schäume besitzen fast seine Wandungen, sondern bestehen überwiegend aus einem Gitterwerk von Stegen, die Käfige eines Durchmessers von etwa 1 bis 5 mm bilden. Nach Beschichtung mit Ionenaustauscherkügelchen und gegebenenfalls mit Adsorberteilchen weisen die retikulierten Schäume eine verhältnismäßig große Steifigkeit auf.

Bei Verwendung von großporigen retikulierten Polyolefin-Schäumen als Träger kann in der Regel auf ein Haftmittel verzichtet werden, weil das Polyolefin-Gitter beim Erhitzen genügend klebrig wird, um daran (getrocknete) Ionenaustauscherkörner dauerhaft und ohne Kleber zu fixieren. Wichtig ist allerdings, das Ineinandersacken des Trägers zu verhindern. Das geschieht dadurch, daß man den Polyolefin-Schaum zuerst vollständig mit den Ionenaustauscherkügelchen füllt; der so "ausgestopfte" Träger kann nicht mehr zusammenfallen bzw. wegsehrumpfen. Nach dem Abkühlen wird der Überschuß problemlos herausgeklopft, denn nur die Teilchen, die mit dem klebrig gewordenen Träger Kontakt hatten, bleiben fixiert. Auf diese Weise lassen sich beliebige Körper, auch Platten, ausbilden. Schrumpft man diese in eine geeignete Schrumpffolie ein, und verstärkt die Außenseite, beispielsweise durch eine geeignete. Umwicklung, erhält man auf einfachste Weise einen funktionsfähige Ionenaustauscher, Voraussetzung ist, daß die verwendeten Ionenaustauscherkörner die Temperatur, bei der der polymere Träger klebrig wird, vertragen. Bei einem Polyolefin liegt diese Temperatur bei ca. 155 bis 160°C. Ionenaustauscher werden normalerweise mit ca. 50 % Feuchte angeboten. Beim Trocknen tritt deshalb eine Schrumpfung ein, was besonders bei den nur schwach vernetzten Geltypen der Fall ist. Das kann bei ungenügend großen Poren beim Wiederbefeuchten zu Problemen führen, der Durchmesser sollte daher mindestens das Dreifache des Teilchendurchmessers betragen.

Die erfindungsgemäßen mit stark basischen Anionenaustauschern beladenen Filter eignen sich besonders gut zur Reinigung von Luftströmen von gasförmigen sauren Stoffen, insbesondere von Schwefeldioxid zur Erzeugung von Reinluft. Sie ermöglichen aber auch die Entfernung von Formaldehyd und verhindern den Geruch, der Aktivkohlefiltern anhaftet, und in der durchströmten Luft wahrnehmbar ist. Dieser Geruch ist nicht mehr in der Reinluft wahrnehmbar, wenn ausströmseitig am Aktivkohlefilter ein erfindungsgemässes mit stark basischen Anionenaustauschern beladenes Filter nachgeschaltet wird.

Die erfindungsgemäßen mit stark sauren Kationenaustauschern beladenen Filter ermöglichen die wirksame Entfernung von gasförmigen basischen Stoffen, insbesondere Ammoniak aus Luftströmen. Die beiden Typen von Filtern für Reinluft können auch hintereinandergeschaltet werden. Den großporigen retikulierten Polymer-Schaum, sowohl mit Anionenaustauscherkügelchen als auch mit Kationenaustauscherkügelchen, zu umhüllen ist möglich, empfiehlt sich aber nicht, wenn die Filter in üblicherweise mit wäßrigen Medien regeneriert werden sollen, weil das bekanntlich bei beiden Typen mit verschiedenen Mitteln erfolgt.

Ersinunlicherweise wurde gefunden, daß sich verbrauchte, d.h. in ihrer Ionenaustauscherkapazität stark reduzierte Filter mit den Kationenaustauscherkügelchen sich auch thermisch gut regenerieren lassen. Bei kurzer Regenerierung mit heißer Luft bis zu etwa 150 °C wurde die NH₃-Kapazität beim stark sauren Kationenaustauscher vollständig wiederhergestellt. Ähnliche Effekte sind auch bei den Anionenaustauschern zu beobachten. Bei dieser Art der Regenerierung können an dem hoch luftdurchlässigen Träger also sowohl Kationenaustauscher- als auch Anionenaustauscherkügelchen fixiert sein.

### Beispiel 1

Ein retikulierter Polyolefin-Schaum in Form einer 40x30x2 cm großen Platte, Litergewicht ca. 30 g, Porosität 15 ppi, wurde in einer Fotoschale mit getrockneten Ionenaustauscherkügelchen (Kationenaustauscher auf Basis von Styrol/Divinylbenzol, Geltyp, Kugeldurchmesser 0,3 bis 0,6 mm) bedeckt, so daß der Schaum vollständig mit den Kügelchen gefüllt war. Danach wurde alles in einen auf 165 °C aufgeheizten Trockenschrank gestellt. Während ein Schaum ohne Ionenaustauscher nach 2 bis 3 Minuten zusammensackt, behielt der mit den Ionenaustauschern gefüllte Schaum seine Dimensionen, da er wegen der Füllung nicht schrumpfen konnte. Nach 60 Minuten wurde abgekühlt und der Überschuß herausgeschüttelt. Etwa 150 g Ionenaustauscher/Liter Schaum wurden dauerhaft fixiert. Die selbsttragenden Platten hatten einen Durchflußwiderstand der 8 bis 10mal geringer war als eine Schüttung gleicher Kapazität.

## Patentansprüche

1. Filter für Reinluft, enthaltend einen hoch luftdurchlässigen dreidimensionalen Träger, an dem Ionenaustauscherkügelchen fixiert sind, wobei der Träger ein großporiger, retikulierter Polyolefinschaum mit einem Litergewicht von 20 bis 60 g ist und Poren von 1,5 bis 3 mm Durchmesser enthält und die Haftung der lonenaustauscherkügelchen durch Erhitzen zustande kommt, wobei die Hohlräume zwischen den fixierten Kügelchen 0,1 bis 3, vorzugsweise 0,5 bis 1, mittlerer Kugeldurchmesser groß sind.

2. Filter nach Anspruch 1, **dadurch gekennzeichnet, dass** ein hoch luftdurchlässiges textiles Trägermaterial ein- oder beidseitig mit einer Schicht von Ionenaustauscherkügelchen versehen ist.

3. Filter nach Anspruch 1 oder 2, **dadurch gekennzeichnet, dass** die Ionenaustauscherkügelchen stark basische Anionenaustauscher sind.

4. Filter nach Anspruch 1 oder 2, **dadurch gekennzeichnet, dass** die Ionenaustauscher stark saure Kationenaustauscher sind.

5. Filter nach Anspruch 1, **dadurch gekennzeichnet, dass** der Polyolefinschaum hydrophil ist.

6. Filter nach Anspruch 5, **dadurch gekennzeichnet, dass** der Polyolefinschaum eine Porosität von 8 bis 30 ppi aufweist.

7. Verwendung eines Anionenaustauscherfilters nach einem der vorangehenden Ansprüche zur Reinigung von Luftströmen von gasförmigen sauren Stoffen oder von Formaldehyd.

8. Verwendung des Filters nach Anspruch 7 zur Reinigung der Luftströme von Schwefeldioxid.

9. Verwendung eines Kationenaustauscherfilters nach einem der vorangehenden Ansprüche zur Reinigung von Luftströmen von gasförmigen basischen Stoffen.

10. Verwendung des Filters nach Anspruch 9 zur Reinigung der Luftströme von Ammoniak.

## Claims

1. Filter for pure air, comprising a highly air-permeable three-dimensional carrier, on which are fixed ion exchange pellets, whereby the carrier is a reticulated polyolefin foam with large pores and a weight per litre from 20 to 60 gram ; which carrier has pores with a diameter from 1,5 to 3mm and whereby the adhesive strength between the ion exchange pellets is induced by heating and the cavities between the fixed pellets have an average spherical diameter comprised between 0, 1 and 3 , preferred between 0,5 and 1.

2. Filter according to claim 1, caracterized in that a highly air-permeable textile carrier material is provided on one or both sides with an ion exchange pellet layer.

3. Filter according to claim 1 or 2, caracterized in that the ion exchange pellets are highly basic anion exchangers.

4. Filter according to claim 1 or 2, caracterized in that the ion exchangers are highly acid cation exchangers.

5. Filter according to claim 1 , caracterized in that the polyolefin foam is hydrophilic.

6. Filter according to claim 5, caracterized in that the polyolefin foam features a porosity of 8 to 30 ppi.

7. Utilisation of an anion exchange filter according to one of the preceding claims for cleaning of air flows containing gaseous acid materials or formaldehyde.

8. Utilisation of the filter according to claim 7 for cleaning of air flows containing sulphur dioxide.

9. Utilisation of a cation exchange filter according to one of the preceding claims for cleaning of air flows containing gaseous basic materials.

10. Utilisation of the filter according to claim 9 for cleaning of air flows containing ammoniac.

## Revendications

1. Filtre pour avoir de l'air pur comportant un support à trois dimensions laissant largement passer l'air, sur lequel support sont fixés des petites billes à échange d'ions ; le support étant une mousse de polyoléfine réticulée à grosses pores avec un poids par litre de 20 à 60 g et comporte des pores d'un diamètre situé entre 1,5 et 3 mm et où l'adhésion des petites billes à échange d'ions se fait par échauffement, où les cavités entre les petites billes fixées présentent un diamètre sphérique moyen entre 0,1 et 3, de préférence entre 0,5 et 1.

2. Filtre selon la revendication 2, **caractérisé en ce qu'**un matériau de support en textile très perméable à l'air est pourvu d'une ou plusieurs couches de petites billes à échange d'ions.

3. Filtre selon la revendication 1 ou 2, **caractérisé en ce que** les petites billes à échange d'ions sont des échangeurs d'anions fortement basiques.

4. Filtre selon la revendication 1 ou 2, **caractérisé en ce que** les échangeurs d'ions sont des échangeurs de cations fortement acides.

5. Filtre selon la revendication 1, **caractérisé en ce que** la mousse en polyoléfine est hydrophile.

6. Filtre selon la revendication 5, **caractérisé en ce que** la mousse en polyoléfine présente une porosité de 8 à 30 ppi.

7. Utilisation d'un filtre à échange d'anions selon une des revendications précédentes destiné à nettoyer des flux d'air contenant des matières gazeuses acides ou de formaldéhyde.

8. Utilisation du filtre selon la revendication 7 pour nettoyer les flux d'airs contenant du dioxyde de souffre.

9. Utilisation d'un filtre à échange de cations selon une des revendications précédentes, pour nettoyer des flux d'airs contenant des matières gazeuses basiques.

10. Utilisation du filtre selon la revendication 9 pour nettoyer les flux d'airs contenant de l'ammoniaque.
